(19) Europäisches Patentamt

European Patent Office

Office européen des brevets

(11) **EP 2 453 606 A1**

(12) **EUROPEAN PATENT APPLICATION**

(43) Date of publication:
**16.05.2012 Bulletin 2012/20**

(51) Int Cl.:
***H04L 9/32*** (2006.01)

(21) Application number: **11188599.2**

(22) Date of filing: **10.11.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **12.11.2010 US 945510**

(71) Applicant: **NXP B.V.
5656 AG Eindhoven (NL)**

(72) Inventor: **Murray, Bruce
5656 AG Eindhoven (NL)**

(74) Representative: **Krott, Michel
Intellectual Property and Licensing
NXP Semiconductors
High Tech Campus 60
5656 AG Eindhoven (NL)**

(54) **Secured Acknowledge Protocol for Automotive Remote Keyless Entry Systems and for Networked Sensor Devices**

(57) A method for generating a secure acknowledgment message that involves constructing a plaintext of the acknowledgment message, computing a cyclic redundancy check (CRC) value for the plaintext of the acknowledgment message, encrypting the plaintext of the acknowledgment message to obtain a ciphertext of the acknowledgment message, computing a secure check (CHK) value from the ciphertext using bits of the cyclic redundancy check value (CRC) and then appending the secure check value (CHK) to the plaintext of the acknowledgment message.

FIG. 2

**Description**

Automotive keyless entry systems typically use a remote control device to unlock the car when a button is pressed and are widely used in modern cars. Typical automotive keyless entry systems use a "rolling code" where the command information (e.g. an UNLOCK command) is sent in the form of a message which includes a counter value and the result of a cryptographic computation (i.e. an encryption) of the counter value and other information such as a code defining the command and the identifier for which the command is intended.

Because remote keyless entry devices operate on battery power, a typical consideration is to minimize the power consumption of the device and, in particular, to minimize the length of the message transmitted. The radio frequency transmission portion of the operation typically consumes a disproportionate amount of the power used. Hence, while an encryption of the "rolling code" may be performed in the remote keyless entry device, it is typically not necessary to transmit the entire result of the encryption operation.

Secure wired and wireless networks comprising a master controller/base station and remote sensors or other devices may also require a message to be addressed to a particular device and for the addressed device to respond with an acknowledgment message in a secure manner.

Fig. 1 shows a system in accordance with the invention.
Fig. 2 shows an embodiment in accordance with the invention.
Fig. 3 shows an embodiment in accordance with the invention.
Fig. 4 shows an embodiment in accordance with the invention.
Fig. 5 shows an embodiment in accordance with the invention.

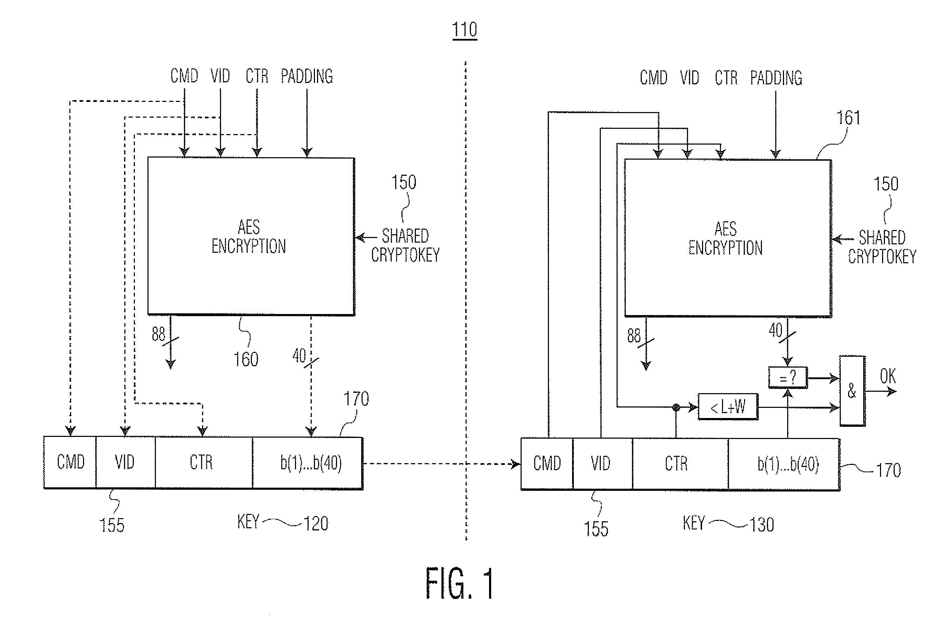

Fig. 1 shows a typical remote keyless entry (RKE) system 110 for automobiles having key 120 and vehicle 130 portions. With respect to Fig. 1, "vehicle 130" may refer to an RKE system that is located in the car. More generally, in accordance with the invention, key 120 may refer to a master controller or base station and vehicle 130 may denote a sensor or a device on a wired (e.g. automotive bus) or wireless network. Key 120 and vehicle 130 share unique cryptographic key 150 which is used to authenticate message 155 sent from key 120 to vehicle 130. Message 155 typically contains command CMD, vehicle identifier VID and counter value CTR. In an exemplary embodiment in accordance with the invention, 40 bits b(1)...b(40) out of 128 bits b(1)...b(128) are taken from the result of encrypting these values using the shared cryptographic key 150 to function as the message authentication code (MAC) 170. This leaves 88 bits unused and available for use in protecting the response message.
When vehicle 130 receives message 155, AES (Advanced Encryption Standard) encryption circuitry 161 in vehicle 130 performs encryption of the received values of CMD, VID and CTR in message 155 using shared cryptographic key 150 and verifies that the 40 least significant bits (5least significant bytes) match MAC 170. Note that AES encryption circuitry 160, 161 may comprise a suitably programmed microprocessor. Because key 120 and vehicle 130 share cryptographic key 150, if vehicle 130 finds that the transmitted values of 40 bits b(1)...b(40) (i.e. MAC 170) are consistent with those derived from the local encryption by vehicle 130 there is a high probability that message 155 originated from key 120 intended for use with vehicle 130.

AES encryption circuitry 160, 161 employs an industry standard block cipher used in RKE that typically encrypts 128 bit or equivalently, 16 byte data blocks using cryptographic key 150 which may be 128, 192 or 256 bits in length. It should be noted that other block ciphers with a larger block size than 128 bits may be used in accordance with the invention. Because AES encryption circuitry 160, 161 uses a 128 bit block cipher size, a large number of bits are unused for typical RKE systems. Typical RKE systems do not need to transmit MAC 170 that is longer than that required to keep the probability of an attacker guessing the encryption result sufficiently low (e.g. length of 40 bits or 5 bytes), which is a probability of $2^{-40}$ in this embodiment in accordance with the invention. The transmission of all 128 bits (16 bytes) of the encryption result typically results only in a reduced battery life for key 120 due to the longer message length and the corresponding longer time that the radio frequency transmitter needs to be activated.

The purpose of counter value CTR in message 155 is to avoid "replay" issues: when a valid command containing a particular counter value has been received, a corresponding counter located in vehicle 130 is updated and no command with a lower counter value is then accepted. This prevents transmitted commands that are captured by an attacker from being re-transmitted to access the car. Typical RKE systems provide for an "acceptance window" for the counter value so that if the new received counter value is less than the last verified value plus the value of the acceptance window, the command is still accepted. The presence of an acceptance window allows for the possibility that the key has been operated out of the range of the car which results in an increment of the counter in key 120 without vehicle 130 detecting that this has occurred.

In addition to the power expended on transmission by key 120, AES encryption circuitry 160 consumes significant power. Performing a second AES operation within key 120 is necessary if RKE system 110 requires vehicle 130 to send an "acknowledgement" message back to key 120 which results in significant additional power requirements. Such an acknowledgement message may be used, for example, to trigger an LED flash or LCD display on key 120 that confirms that the car has been locked.

The acknowledgment message needs to be secure. A typical form of attack exploiting the acknowledgment message in such RKE systems involves a two step process: 1) the attacker first corrupts message 155 carrying the "LOCK" command from key 120 to vehicle 130 so that verification fails and the locking of the car is not performed; 2) The attacker attempts to send a false acknowledgement message to key 120 to fool the user into believing that the "LOCK" command was successfully performed and thereby allowing access to the car. Other possible attack scenarios include modifying a legitimate acknowledgement message to indicate a "LOCKED" status when the car is actually "UNLOCKED".

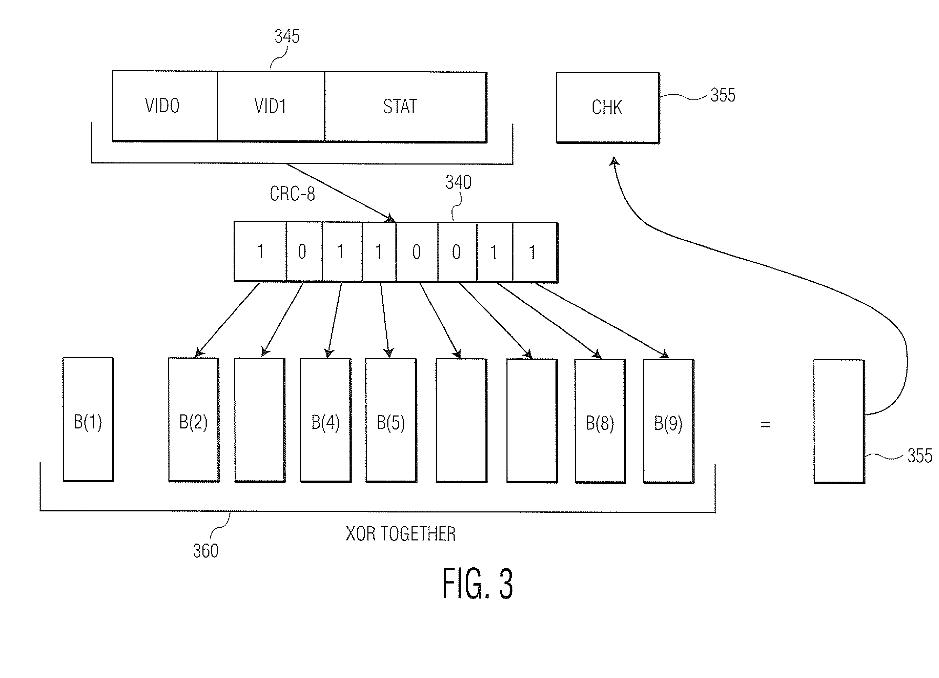

In accordance with the invention, the acknowledgment message 345 (see Fig. 3) is made cryptographically secure without requiring significant additional cryptographic computation in key 120.

In accordance with the invention, the unused bits (e.g. bits b(41)...b(128) produced by the AES encryption circuitry 161 are used to construct a secure acknowledgment message. The unused 88 bits (e.g. bits b(41)...b(128) are known to both key 120 and vehicle 130 when message 155 received by vehicle 130 has been verified as valid. The unused bits b(41)...b(128) are only valid for the message transaction in which they are generated and are overwritten with new values when the next message transaction occurs. Hence, the unused bits function as a "one-time" shared secret between key 120 and vehicle 130 that is unknown to the potential attacker. It should be noted that any alternative encryption scheme to AES may be used in accordance with the invention as long as the encryption scheme generates unused cipher text bytes which are not put into message 155 from key 120 to vehicle 130.

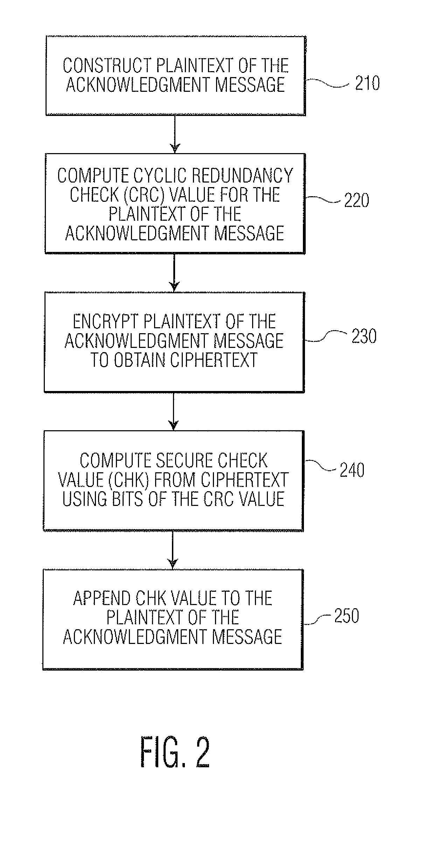

Fig. 2 shows an embodiment in accordance with the invention for constructing a secure acknowledgement message such as secure acknowledgment message 345 (see Fig. 3). In step 210, the plaintext of acknowledgment message is constructed. For example, the plaintext of the acknowledgment message may consist of 24 bits (3 bytes) where 16 bits (two bytes) are used for vehicle 130 identifier VID and the remaining 8 bits (one byte) are used for status byte STAT as shown for acknowledgment message 345 in Fig. 3. The status byte STAT provides information about the car status, such as if the car is "LOCKED" or "UNLOCKED". In step 220, a cyclic redundancy check (CRC) value is computed for the plaintext of the acknowledgment message. The CRC value is an efficient and well-known process which provides error detection capability for transmitted data but is not a secure process. An attacker can readily compute the new CRC value for the data content of a modified acknowledgment message. In step 230, the plaintext of the acknowledgment message is encrypted to obtain the ciphertext of the acknowledgment message. In step 240, the bits of the CRC value are used to compute a new secure check (CHK) value. For example, a new CHK value may be calculated using the following algorithm:

    CHK = B(1);
    for j = 1 to k do
    if bit (j, CRC) =1 then

$$CHK = CHK \; XOR \; B(j+1); \qquad (1)$$

    end

where bit (j, CRC) means the j-th bit of the CRC byte counting from 1 to k where k is the bit size of each block B. B(1)....B(k+1) are the blocks that the ciphertext has been divided into which corresponds to bits b(41)...b(128) in an exemplary embodiment in accordance with the invention. In step 250, the CHK value is appended to the acknowledgment message. An attacker who does not know the shared secret bits (e.g. bits b( 41)... b(112) used in the case of the CRC value having 8-bits when a 128 bit standard block cipher is used ) is unable to reconstruct the calculation performed in step 230. The probability for success of guessing the CHK value using the above algorithm is 1 in $2^k$ (e.g. 1 in 256 if using an 8-bit CRC value). In an exemplary embodiment in accordance with the invention, modulo $2^k$ addition may be used (modulo 256 if using an 8 bit CRC value) instead of XOR, so that in place of the XOR operation:

    CHK = B(1);
    for j = 1 to k do
    if bit (j, CRC) =1 then

$$CHK = CHK + B(j+1) \; modulo \; 2^k; \qquad (2)$$

end

where bit(j, CRC) and B(1)...B(k+1) are as defined for Eq. (1). In accordance with the invention, other operations are also possible for creating the CHK value as long as the operation has the property that all (e.g. 256) possible results have an equal probability of being generated when the bytes are combined using the selected operation (e.g. XOR). This means that all CHK values are equally probable for an attacker who does not know the secret shared bytes and the attacker's probability of success is no better than guessing.

Fig. 3 illustrates construction of acknowledgment message 345 in diagrammatic form for the case of 8-bit CRC value 340 and 8-bit CHK 355 in accordance with an embodiment of the invention. In this embodiment, VIDO, VID1 and STAT of acknowledgment message 345 are each 8-bits/1-byte in size. The 8- bit CRC value 340 is generated from VIDO, VID1 and STAT bytes and is shown in this exemplary embodiment as "101110011". The calculation of 8-bit CHK 355 computation unconditionally includes bits b(41)...b(48) (= B(1) in Eqs. (1) and (2)) in the set of blocks to be XORed together. This avoids the possibility that an all zero-CRC maps to an all zero-CHK value and that certain combinations of VID and STAT would have a value for CHK 355 that did not depend on a shared secret. If the value of CHK 355 did not depend on a shared secret, an attacker could easily insert a valid message and gain access to the vehicle. Note that the value of CHK 355 is valid for only one message and when the next message is accepted by vehicle 130, new values for the bits, b(41)...b(128) are generated (note only bits b(41)...b(112) are actually used) .

In general, the probability of an attacker randomly guessing the CHK value is 1 in $2^L$ (e,.g. 1 in 256 for CHK 355 which is 8-bits in length, see Fig. 3) where L is the length of the CHK value in bits. If an attacker modifies only the content of the STAT byte in Fig. 3, for example, she has to successfully guess the XOR of the blocks from B(1) to B(9) (corresponding to a modification of CRC value 340) to maintain a valid CHK value. The probability for guessing successfully is 1 in 256 for the embodiment in accordance with the invention shown in Fig. 3 (or 1 in $2^L$ in general where L is the length of the CHK value in bits).

An attacker who attempts to modify the content of acknowledgment message 345 (i.e. VIDO, VID1 and STAT) in an embodiment in accordance with the invention, and not change CRC value 340 (to keep the CHK byte valid) is unable to do so by only modifying the STAT byte value. This is a direct consequence of the properties of CRC value 340. CRC 340 has the property that the length (in bits) of any modification which keeps CRC value 340 consistent must be longer than the length in bits of the data filed (e.g. the STAT byte field) that is being protected. Mathematically, CRC value 340 is the remainder value when the message bytes VIDO, VID1 and STAT are treated as a polynomial over the Galois field of two elements (GF(2)) and divided by the degree 8 polynomial which defines CRC value 340 in an embodiment in accordance with the invention. Therefore, only integer multiples of the degree 8 polynomial can be XORed with the bytes of message 335 and because the degree 8 polynomial spans 9 bits (1 bit larger than the 8 bit size of a byte), any modification cannot change only the STAT byte. This is because original acknowledgment message 345 was constructed to be an exact multiple of the degree 8 polynomial which defines CRC value 340 when original acknowledgement message 345 is concatenated with the plaintext of the CRC. An attacker who tries to preserve this property of acknowledgment message 345 would need to XOR a multiple of the degree 8 polynomial which defines the CRC value 340 to acknowledgment message 345, this multiple must span at least 9 bits because the degree eight polynomial that defines CRC value 340 is 9 bits long. Therefore, it is not possible for the modified acknowledgment message to differ only in the STAT byte field because the STAT byte field is only 8 bits long. This means that any modification cannot leave the VIDO and/or VID 1 field unchanged which ensures that the response message is not accepted by vehicle 130.

The CHK byte construction method in accordance with the invention ensures that any malicious modification by an attacker only generates an acceptable acknowledgment message with the same probability as guessing the CHK byte value as well as providing a method for detecting innocent transmission errors. In accordance with the invention, longer CRC fields and/or different message lengths may be employed as long as sufficient secret bytes are available in the encryption method used and the CRC length is as long or longer than the bit length of the essential informational content carried in the acknowledgment message (i.e. the equivalent of the STAT byte). Examples of other block ciphers may be those with a 192-bit or a 256-bit block size. Note that the Rijndael cipher on which AES is based has a block size of a minimum of 128 bits and a maximum of 256 bits with unlimited key sizes and that block sizes and key sizes must be multiples of 32. If, for example, a 256-bit block size is used instead of a 128-bit block size then a single encryption yields 256 bits (32 bytes) of which only a small number are used in the message. In the RKE system described above, only 40 bits of the output of the encryption are used for MAC 170, allowing 216-bits to be used to protect the acknowledgment message.

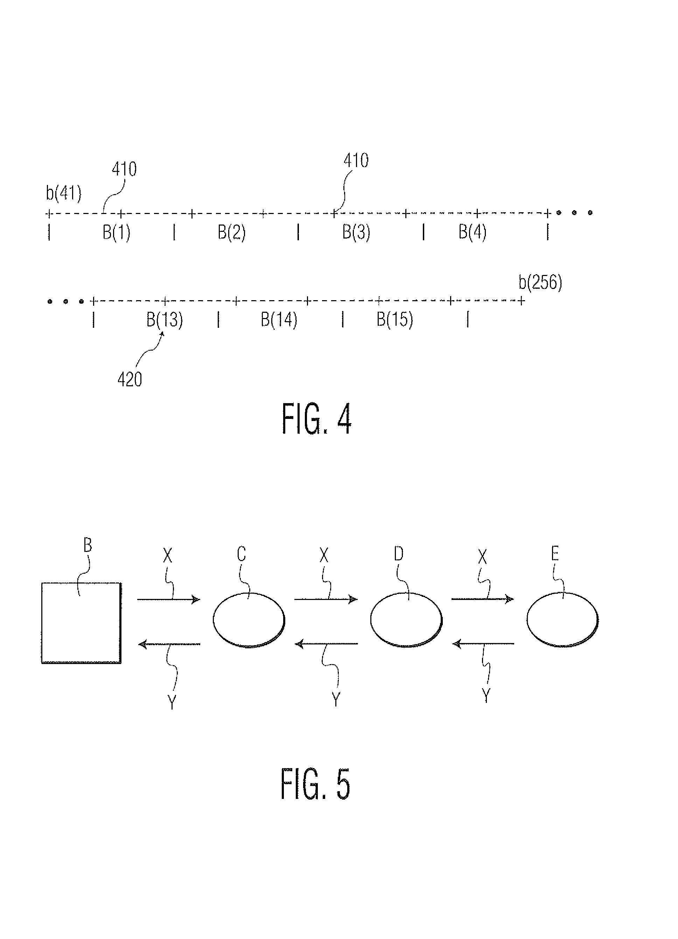

In accordance with the invention, the same construction as described above for 128-bit block size is possible with a k-bit CRC and XORing or modulo $2^k$ addition of up to (k+1) blocks of k-bits each subject to the condition that $k(k + 1) \leq 216$. Taking k = 14 and excluding the bits b(1)...b(40) typically used for the MAC that are known to the attacker due to transmission, a bit string composed of the remaining 216 bits, b(41)...b(256), is available to protect the response. The remaining bit string composed of 216 bits b(41)...b(256) can be split into 15 blocks that each are of 14-bit size with the 6 bits left over. FIG. 4 shows how the 15 blocks B 420 and designated B(0)...B(14) may be derived from the remaining 216 bits b 410, designated as b(41)...b(256).

The 14-bit CRC (cyclic redundancy check) can be computed over the "acknowledgement" message and then:

```
CHK = B(1);
for j = 1 to 14 do
if bit (j, CRC) =1 then
```

$$CHK = CHK \text{ XOR } B(j+1); \qquad (3)$$

```
end
```

where bit(j, CRC) means the j-th bit of the CRC byte counting from 1 to 14 and blocks B(0)...B(14) are derived from bits b(41)...b(256) as shown in Fig. 4. Again in accordance with the invention, in Eq. (3) the XOR operation may be replaced with addition modulo $2^{14}$. The advantage of using a larger block size, here 14 bits, is that the attacker's probability of successfully generating a false acknowledgement message is reduced to $2^{-14}$ or about 1 in 16, 000 versus $2^{-8}$ or about 1 in 256.

While it may appear to be inefficient to use a 256-bit block cipher when typically only 40 bits of the output is used for MAC 170 on the originally transmitted message 155 (see Fig. 1) in an embodiment in accordance with the invention, it should be noted that the needed size of the message authentication code (MAC) is only related to the acceptable probability for guessing it. In the RKE context the probability must typically be low enough that an attacker cannot, for example, leave an unattended device in the proximity of the car to try a large number of message authentication codes (MACs) by a "brute force guessing all the possibilities" attack. The block size of the cipher that is employed determines the size of the original transmitted message 155 that can be protected because the block cipher has identically sized input and output blocks. Hence, if the system design required a large address field or data to be included in message 155 for which MAC 170 is constructed, all of the data needs to be included in the input block. In certain applications, such as for example, a sensor network that uses internet protocol IPv6 and therefore a 16-byte IP address which together with other data requires a block size of at least 32-bytes, the original transmitted message may contain a comparatively large amount of information. Hence, the block size of the cipher may also be determined by the size of the message applied to the input and not only by the number of required output bits required for the MAC.

Other applications in accordance with the invention include low-complexity acknowledge systems in automotive bus systems and wireless sensor networks where an acknowledgment message needs to be received and verified by a device which needs to minimize power consumption related to cryptographic computations. In such applications the communication is extended from being between two specific devices such as key 120 and vehicle 130 to communication on a multi-device network. Here a device sending the original message directs it to one of the multiple devices either over a wireless or wired (e.g. automotive bus) network. The original message incorporates an identifier for the device to be securely addressed and requests response data relating to one or more parameters (e.g. inlet manifold pressure, engine speed if on an automotive bus).

For example, vehicle manufacturers typically seek to ensure the security of engine related data to prevent tampering that can adversely affect vehicle performance or emissions. In accordance with the invention, the engine control unit (ECU) or the electronic control module sends its request on the automotive bus and the addressed sensor device protects its returned data (the plaintext of the acknowledgment message) by appending a CHK value to the returned data to generate a secured acknowledgment message. The sensor device can very quickly compute its response as discussed above and the ECU or the electronic control module can perform the verification of the response using relatively few XORs or modulo additions or other suitable mathematical operations. This provides a low latency for the returned sensor device data which is an important issue in the design of feedback control systems incorporated into ECUs or electronic control modules for automobiles such as active suspension control modules and braking system control modules.

Wireless networks, such as for example, Bluetooth, Zigbee and 802.11 are similar in principle to wired networks in requiring a message to be addressed to a particular device and for the addressed device to respond with an acknowledgment message. However, in some wireless networks, a device on the network may function as a "relay" by forwarding messages. For example, if a low power sensor is out of range of the master controller because the sensor device's transmit power level is too low to enable the signal to be sent directly to the master controller, then another device more proximate to the sensor device can be used to forward the message. Additionally, if a master controller desires to contact a sensor device that is out of range, a signal can be relayed to the out of range sensor by a sensor that is closer. In particular with reference to Fig. 5, if master controller or base station B wants to send a message to sensor or device E and sensor E is out of transmission range of base station B then the message from base station B to sensor E can be relayed. If, for example, base station B can reach sensor C, sensor C can reach sensor D and sensor D can reach sensor E then when base station B sends a message X to sensor E, sensor C retransmits message X to sensor D which sends it to sensor E. Sensor E then generates Y secure acknowledgement message in accordance with the invention which is retransmitted to sensor C by sensor D and sensor C retransmits secure acknowledgement message Y to base station B.

It is typically important to maintain the security of such wireless networks. Tampering attempts by an attacker device that has been inserted into the wireless network may be defeated in accordance with the invention as described.

While the invention has been described in conjunction with specific embodiments, it is evident to those skilled in the art that many alternatives, modifications, and variations will be apparent in light of the foregoing description. Accordingly, the invention is intended to embrace all other such alternatives, modifications, and variations that fall within the spirit and scope of the appended claims.

**Claims**

1. A method for generating a secure acknowledgment message comprising:

   constructing a plaintext of the acknowledgment message;
   computing a cyclic redundancy check (CRC) value for the plaintext of the acknowledgment message;
   encrypting the plaintext of the acknowledgment message to obtain a ciphertext of the acknowledgment message
   computing a secure check (CHK) value from the ciphertext using bits of the cyclic redundancy check value (CRC); and
   appending the secure check value (CHK) to the plaintext of the acknowledgment message to generate the secure acknowledgment message.

2. The method of Claim 1 wherein computing the secure CHK value comprises using the bits of the CRC value to determine which blocks of the ciphertext are XORed together to form the CHK value.

3. The method of Claim 1 wherein computing the secure CHK value comprises using the bits of the CRC value to determine which blocks of the ciphertext are summed together modulo $2^k$, where k+1 is the number of blocks of the ciphertext, to form the CHK value.

4. The method of Claim 1 wherein a selected block of the ciphertext is always included in the computation of the secure CHK value.

5. The method of Claim 1 wherein the plaintext of the acknowledgment message consists of at least 24 bits.

6. The method of Claim 1 wherein the encryption of the plaintext of the acknowledgment message is performed using the Advanced Encryption Standard.

7. A wireless network comprising a master controller and a sensor device wherein the sensor device sends the secure acknowledgment message generated according to the method of Claim 1 in response to an authenticated message from the master controller.

8. A wireless network comprising a master controller and a first and a second sensor device wherein the second sensor device is out of range of the master controller and the first sensor device is within the range of the master controller, the second sensor device sends the secure acknowledgment message generated according to the method of Claim 1 by relay via the first sensor device to the master controller in response to an authenticated message from the master controller.

9. A remote keyless entry system comprising a key portion and a vehicle portion wherein the vehicle portion sends the secure acknowledgment message generated according to the method of Claim 1 in response to an authenticated command from the key portion.

10. An automotive bus network comprising an engine control unit and a sensor device wherein the sensor device sends the secure acknowledgment message generated according to the method of Claim 1 in response to a request from the engine control unit.

11. An automotive bus network comprising an electronic control module and a sensor device wherein the sensor device sends the secure acknowledgment message generated according to the method of Claim 1 in response to a request from the electronic control module.

FIG. 1

CONSTRUCT PLAINTEXT OF THE
ACKNOWLEDGMENT MESSAGE ⟩— 210

COMPUTE CYCLIC REDUNDANCY
CHECK (CRC) VALUE FOR THE
PLAINTEXT OF THE
ACKNOWLEDGMENT MESSAGE ⟩— 220

ENCRYPT PLAINTEXT OF THE
ACKNOWLEDGMENT MESSAGE
TO OBTAIN CIPHERTEXT ⟩— 230

COMPUTE SECURE CHECK
VALUE (CHK) FROM CIPHERTEXT
USING BITS OF THE CRC VALUE ⟩— 240

APPEND CHK VALUE TO THE
PLAINTEXT OF THE
ACKNOWLEDGMENT MESSAGE ⟩— 250

FIG. 2

345

| VID0 | VID1 | STAT |
|------|------|------|

CHK — 355

CRC-8                    340

| 1 | 0 | 1 | 1 | 0 | 0 | 1 | 1 |
|---|---|---|---|---|---|---|---|

| B(1) | B(2) | | B(4) | B(5) | | | B(8) | B(9) |   =   |  |

355

XOR TOGETHER

360

FIG. 3

b(41)      410                    410

+ - - - - - + - - - - - + - - - - - - + - - - - - + - - - - - + - - - - - +  • • •
|      B(1)      |      B(2)      |      B(3)      |      B(4)      |

                                                                    b(256)
• • • + - - - - - + - - - - - + - - - - - + - - - - - + - - - - - +
    |      B(13)      |      B(14)      |      B(15)      |

420

# FIG. 4

B          X          C          X          D          X          E

# FIG. 5

Europäisches
Patentamt

European
Patent Office

Office européen
des brevets

## EUROPEAN SEARCH REPORT

Application Number

EP 11 18 8599

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 5 940 007 A (BRINKMEYER HORST [DE] ET AL) 17 August 1999 (1999-08-17) * the whole document * ----- | 1-11 | INV. H04L9/32 |
| A | US 2006/184456 A1 (DE JANASZ CHRISTOPHER G [US]) 17 August 2006 (2006-08-17) * the whole document * ----- | 1-11 | |
| A | EP 0 739 109 A2 (UNITED TECHNOLOGIES AUTOMOTIVE [US]) 23 October 1996 (1996-10-23) * the whole document * ----- | 1-11 | |
| | | | TECHNICAL FIELDS SEARCHED (IPC) |
| | | | H04L G07C B60R |

The present search report has been drawn up for all claims

| Place of search | Date of completion of the search | Examiner |
|---|---|---|
| Munich | 13 February 2012 | Mariggis, Athanasios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**   EP 11 18 8599

This annex lists the patent family members relating to the patent documents cited in the above-mentioned European search report.
The members are as contained in the European Patent Office EDP file on
The European Patent Office is in no way liable for these particulars which are merely given for the purpose of information.

13-02-2012

| Patent document cited in search report | | Publication date | Patent family member(s) | | Publication date |
|---|---|---|---|---|---|
| US 5940007 | A | 17-08-1999 | DE<br>US | 19607017 A1<br>5940007 A | 28-08-1997<br>17-08-1999 |
| US 2006184456 | A1 | 17-08-2006 | NONE | | |
| EP 0739109 | A2 | 23-10-1996 | NONE | | |

For more details about this annex : see Official Journal of the European Patent Office, No. 12/82